(19) **Europäisches Patentamt / European Patent Office / Office européen des brevets**

(11) **EP 3 601 954 B1**

(12) # EUROPEAN PATENT SPECIFICATION

(45) Date of publication and mention
of the grant of the patent:
**03.12.2025 Bulletin 2025/49**

(21) Application number: **18775895.8**

(22) Date of filing: **15.02.2018**

(51) International Patent Classification (IPC):
**G01C 25/00** (2006.01)    **G01D 18/00** (2006.01)
**E21B 7/00** (2006.01)

(52) Cooperative Patent Classification (CPC):
**E21B 47/024; G01C 21/1654; G01C 25/00;
G01C 25/005; G01D 18/004; G01D 18/008;
G01P 21/00; G01V 13/00**

(86) International application number:
**PCT/US2018/018402**

(87) International publication number:
**WO 2018/182870 (04.10.2018 Gazette 2018/40)**

(54) **ADAPTIVE DOWNHOLE INERTIAL MEASUREMENT UNIT CALIBRATION METHOD AND APPARATUS FOR AUTONOMOUS WELLBORE DRILLING**

ADAPTIVES VERFAHREN UND VORRICHTUNG ZUR KALIBRIERUNG EINER TRÄGHEITSMESSEINHEIT IN EINEM BOHRLOCH FÜR AUTONOME BOHRUNGEN

PROCÉDÉ ET APPAREIL D'ÉTALONNAGE ADAPTATIF D'UNITÉ DE MESURE INERTIELLE DE FOND DE TROU POUR FORAGE DE PUITS AUTONOME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2017 US 201762477327 P
27.11.2017 US 201715823489**

(43) Date of publication of application:
**05.02.2020 Bulletin 2020/06**

(73) Proprietor: **HRL Laboratories, LLC
Malibu, CA 90265 (US)**

(72) Inventors:
• **KABAKIAN, Adour V.
Monterey Park, CA 91754 (US)**

• **WANG, Shuoqin
Oak Park, CA 91377 (US)**
• **SORENSON, Logan D.
Thousand Oaks, CA 91362 (US)**
• **NGUYEN, Hung
Los Angeles, CA 90066 (US)**
• **PERAHIA, Raviv
Agoura Hills, CA 91301 (US)**

(74) Representative: **Boult Wade Tennant LLP
Salisbury Square House
8 Salisbury Square
London EC4Y 8AP (GB)**

(56) References cited:
**EP-B1- 2 304 496          WO-A1-2013/082127
WO-A1-2015/013523      US-A1- 2013 292 176
US-A1- 2016 123 765      US-B1- 6 453 239**

## Description

CROSS-REFERENCE TO RELATED APPLICATIONS

The present application is a Continuation-in-Part application of U.S. Application No. 15/823,489, filed in the United States on November 27, 2017, entitled, "Opportunistic Sensor Fusion Algorithm for Autonomous Guidance While Drilling," which is a Non-Provisional patent application of U.S. Provisional Application No. 62/451,019, filed in the United States on January 26, 2017, entitled, "Opportunistic Sensor Fusion Algorithm for Autonomous Guidance While Drilling." U.S. Application No. 15/823,489 is also a Continuation-in-Part patent application of U.S. Application No. 15/387,435, filed in the United States on December 21, 2016, entitled, "Gyromagnetic Geopositioning System," which is a Non-Provisional patent application of U.S. Provisional Application No. 62/321,042, filed in the United States on April 11, 2016, entitled, "Stabilization of Coriolis Vibratory Gyroscopes by Frequency Locking to Ultra Stable Clocks." U.S. Application No. 15/823,489 is also a Continuation-in-Part patent application of U.S. Application No. 15/279,390, filed in the United States on September 28, 2016, entitled, "Real-Time Trajectory Estimation with Multi-Station Analysis," which is a Non-Provisional patent application of U.S. Provisional Application No. 62/233,936, filed in the United States on September 28, 2015, entitled, "Real Time Trajectory Estimation with Multi-Station Analysis." U.S. Application No. 15/823,489 is also a Non-Provisional patent application of U.S. Provisional Application No. 62/427,561, filed in the United States on November 29, 2016, entitled, "Incremental Trajectory Estimation Based on Real Time Inertial Sensing."

The present application is ALSO a Non-Provisional patent application of U.S. Provisional Application No. 62/477,327, filed in the United States on March 27, 2017, entitled, "Adaptive Downhole Inertial Measurement Unit Calibration Method and Apparatus for Autonomous Wellbore Drilling."

BACKGROUND OF INVENTION

(1) Field of Invention

The present invention relates to a system for automatic and adaptive calibration for sensors used in wellbore drilling systems and, more particularly, to a system for automatic and adaptive calibration for sensors used in the guidance and navigation of bottom hole assemblies (BHAs) employed in wellbore drilling systems.

(2) Description of Related Art

Recently, drilling of complicated well trajectories for boreholes has increased. A borehole is a narrow shaft bored in the ground, vertically and/or horizontally, which is constructed for a variety of purposes. There is typically a vertical section from surface, then a curve transition section from vertical to horizontal, and then a horizontal section in the oil and gas reserve. A borehole may be drilled for extraction of water, other liquids (e.g., petroleum) or gases (e.g., natural gas), or as part of a geotechnical investigation, environmental site assessment, mineral exploration, or temperature measurement.

Bottom Hole Assemblies (BHAs) used for directional drilling in the oil industry are fitted with various Inertial Measurement Units (IMUs). The IMUs are sensor packages. The sensors provide the necessary measurements to estimate wellbore trajectories. However, all such sensors exhibit bias and scale factor errors which must be compensated for if trajectory estimates are to be accurate. To this end, the sensors are calibrated before deployment, meaning their bias and scale factors are estimated by various measurement procedures in a laboratory. Due to the harsh drilling environment, sensor characteristics tend to drift unpredictably. As a result, the pre-deployment laboratory calibration becomes increasingly less representative of the state of the sensors, leading to less effective error correction. This results in increased errors for trajectory estimates.

The Multi-Station Analysis (MSA) method provides estimates of the average deviation of each calibration parameter from laboratory calibration throughout an entire operational run. MSA applies a single correction to all of the measurements obtained. Thus, a continuing need exists for a system that applies the best possible individualized correction to each measurement, leading to a more accurate set of measurements and, therefore, more accurate trajectory estimates. WO2015/013523 discloses dynamic calibration of axial accelerometers and magnetometers.

SUMMARY OF INVENTION

The present invention relates to a system for automatic and adaptive calibration for sensors used in wellbore drilling systems and, more particularly, to a system for automatic and adaptive calibration for sensors used in the guidance and navigation of bottom hole assemblies (BHAs) employed in wellbore drilling systems. The system comprises one or more processors and a non-transitory computer-readable medium having executable instructions encoded thereon such that when executed, the one or more processors perform multiple operations.

Following each sensor measurement, the system performs automatic calibration of a multi-axis sensor. A reliability of a current calibration is assessed. If the current calibration is reliable, then the system updates bias and scale factor values according to the most recent sensor measurement, resulting in updated bias and scale factor values. If the current calibration is not reliable, then the system uses previous bias and scale factor values. The system then causes automatic calibration of the multi-axis sensor using either the updated or previous bias and scale factor values.

In another aspect, the system uses the automatic calibration for guidance and navigation of a bottom hole assembly (BHA) employed in a wellbore drilling system.

In another aspect, the system determines a bias value and a scale factor value which best compensate for errors in a previous sensor measurement of the multi-axis sensor, resulting in previous bias and scale factor values.

In another aspect, the errors comprise bias, scale factor, and non-orthogonality errors.

In another aspect, during automatic calibration, the system replaces an oldest sensor measurement in a calibration window with a most recent sensor measurement, and the multi-axis sensor is calibrated using a most recent calibration window.

In another aspect, the system determines a bias vector and a scale factor matrix such that a cumulative error representing a deviation from reference values over all sensor measurements is minimized.

In another aspect, if the current calibration is not reliable, then the system expands a calibration window to include older sensor measurements and re-calibrates the multi-axis sensor until the current calibration is reliable or it is determined that the older sensor measurements are not representative of a current state of the multi-axis sensor, so previous bias and scale factor values are used.

In another aspect, each sensor measurement is weighted such that the most recent sensor measurement has the greatest effect on calibration, and wherein older sensor measurements are assigned lower weights the older they are.

In another aspect, polynomial expansions are used to represent drifts of the bias and scale factor values.

In another aspect, sensor measurements are used to compute estimates of a wellbore path.

The invention further comprises a system for automatic and adaptive calibration for sensors used in a vehicle. The system comprises one or more processors and a non-transitory computer-readable medium having executable instructions encoded thereon such that when executed, the one or more processors perform multiple operations. Following each sensor measurement, the system performs automatic calibration of a multi-axis sensor. A reliability of a current calibration is assessed. If the current calibration is reliable, then the system updates bias and scale factor values according to the most recent sensor measurement, resulting in updated bias and scale factor values. If the current calibration is not reliable, then the system uses previous bias and scale factor values. The system then causes automatic calibration of the multi-axis sensor using either the updated or previous bias and scale factor values. The automatic calibration is used for a vehicle.

Finally, the present invention also includes a computer program product and a computer implemented method. The computer program product includes computer-readable instructions stored on a non-transitory computer-readable medium that are executable by a computer having one or more processors, such that upon execution of the instructions, the one or more processors perform the operations listed herein. Alternatively, the computer implemented method includes an act of causing a computer to execute such instructions and perform the resulting operations.

BRIEF DESCRIPTION OF THE DRAWINGS

The objects, features and advantages of the present invention will be apparent from the following detailed descriptions of the various aspects of the invention in conjunction with reference to the following drawings, where:

FIG. 1 is a block diagram depicting the components of a system for automatic and adaptive calibration for sensors used in wellbore drilling systems according to some embodiments of the present disclosure;

FIG. 2 is an illustration of a computer program product according to some embodiments of the present disclosure;

FIG. 3 is an illustration of accelerometer time history showing the difference between noisy drilling periods and quiet survey periods according to some embodiments of the present disclosure;

FIG. 4 is an illustration of multiple orientations used to measure quantities according to some embodiments of the present disclosure;

FIG. 5 is an illustration of a wellbore trajectory and calibration according to some embodiments of the present disclosure;

FIG. 6A is an illustration of a reference trajectory compared with a trajectory obtained with bias errors applied to the accelerometer triad according to some embodiments of the present disclosure;

FIG. 6B is an illustration of a reference trajectory compared with a trajectory obtained with downhole calibration correcting bias errors according to some embodiments of the present disclosure;

FIG. 7A is an illustration of trajectory error growth with bias errors applied to the accelerometer according to some embodiments of the present disclosure;

FIG. 7B is an illustration of trajectory error with bias errors corrected by downhole calibration according to some embodiments of the present disclosure; and

FIG. 8 is a flow diagram illustrating wellbore trajectory calibration according to some embodiments of the present disclosure.

DETAILED DESCRIPTION

The present invention relates to a system for automatic and adaptive calibration for sensors used in wellbore drilling systems and, more particularly, to a system for automatic and adaptive calibration for sensors used in the guidance and navigation of bottom hole assemblies (BHAs) employed in wellbore drilling systems. The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of aspects. Thus, the present invention is not intended to be limited to the aspects presented, but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the claims herein is not intended to invoke the provisions of 35 U.S.C. 112, Paragraph 6.

(1) Principal Aspects

Various embodiments of the invention include three "principal" aspects. The first is a system for automatic and adaptive calibration for sensors used in wellbore drilling systems. The system is typically in the form of a computer system operating software or in the form of a "hard-coded" instruction set. This system may be incorporated into a wide variety of devices that provide different functionalities. The second principal aspect is a method, typically in the form of software, operated using a data processing system (computer). The third principal aspect is a computer program product. The computer program product generally represents computer-readable instructions stored on a non-transitory computer-readable medium such as an optical storage device, e.g., a compact disc (CD) or digital versatile disc (DVD), or a magnetic storage device such as a floppy disk or magnetic tape. Other, non-limiting examples of computer-readable media include hard disks, read-only memory (ROM), and flash-type memories. These aspects will be described in more detail below.

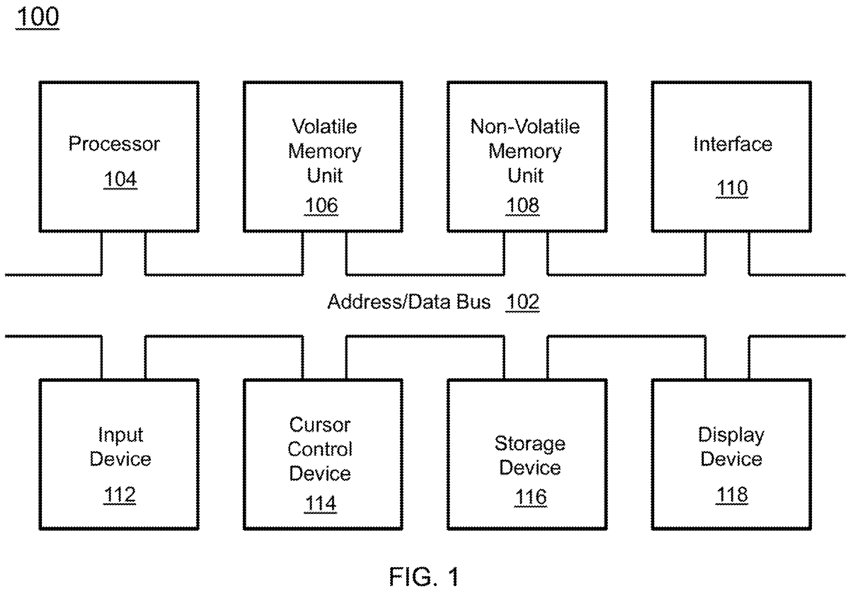

A block diagram depicting an example of a system (i.e., computer system 100) of the present invention is provided in FIG. 1. The computer system 100 is configured to perform calculations, processes, operations, and/or functions associated with a program or algorithm. In one aspect, certain processes and steps discussed herein are realized as a series of instructions (e.g., software program) that reside within computer readable memory units and are executed by one or more processors of the computer system 100. When executed, the instructions cause the computer system 100 to perform specific actions and exhibit specific behavior, such as described herein.

The computer system 100 may include an address/data bus 102 that is configured to communicate information. Additionally, one or more data processing units, such as a processor 104 (or processors), are coupled with the address/data bus 102. The processor 104 is configured to process information and instructions. In an aspect, the processor 104 is a microprocessor. Alternatively, the processor 104 may be a different type of processor such as a parallel processor, application-specific integrated circuit (ASIC), programmable logic array (PLA), complex programmable logic device (CPLD), or a field programmable gate array (FPGA).

The computer system 100 is configured to utilize one or more data storage units. The computer system 100 may include a volatile memory unit 106 (e.g., random access memory ("RAM"), static RAM, dynamic RAM, etc.) coupled with the address/data bus 102, wherein a volatile memory unit 106 is configured to store information and instructions for the processor 104. The computer system 100 further may include a non-volatile memory unit 108 (e.g., read-only memory ("ROM"), programmable ROM ("PROM"), erasable programmable ROM ("EPROM"), electrically erasable programmable ROM "EEPROM"), flash memory, etc.) coupled with the address/data bus 102, wherein the non-volatile memory unit 108 is configured to store static information and instructions for the processor 104. Alternatively, the computer system 100 may execute instructions retrieved from an online data storage unit such as in "Cloud" computing. In an aspect, the computer system 100 also may include one or more interfaces, such as an interface 110, coupled with the address/data bus 102. The one or more interfaces are configured to enable the computer system 100 to interface with other electronic devices and computer systems. The communication interfaces implemented by the one or more interfaces may include wireline (e.g., serial cables, modems, network adaptors, etc.) and/or wireless (e.g., wireless modems, wireless network adaptors, etc.) communication technology.

In one aspect, the computer system 100 may include an input device 112 coupled with the address/data bus 102, wherein the input device 112 is configured to communicate information and command selections to the processor 100. In accordance with one aspect, the input device 112 is an alphanumeric input device, such as a keyboard, that may include alphanumeric and/or function keys. Alternatively, the input device 112 may be an input device other than an alphanumeric input device. In an aspect, the computer system 100 may include a cursor control device 114 coupled with the address/data bus 102, wherein the cursor control device 114 is configured to communicate user input information and/or command selections to the processor 100. In an aspect, the cursor control device 114 is implemented using a device such as a mouse, a track-ball, a track-pad, an optical tracking device, or a touch screen. The foregoing notwithstanding, in an aspect, the cursor control device 114 is directed and/or activated via input from the input device 112, such as in response to the use of special keys and key sequence commands associated with the input device 112. In an alternative aspect, the cursor control device 114 is configured to be directed or guided by voice commands.

In an aspect, the computer system 100 further may include one or more optional computer usable data storage devices, such as a storage device 116, coupled with the address/data bus 102. The storage device 116 is configured to store information and/or computer executable instructions. In one aspect, the storage device 116 is a storage device such as a magnetic or optical disk drive (e.g., hard disk drive ("HDD"), floppy diskette, compact disk read only memory ("CD-ROM"), digital versatile disk ("DVD")). Pursuant to one aspect, a display device 118 is coupled with the address/data bus 102, wherein the display device 118 is configured to display video and/or graphics. In an aspect, the display device 118 may include a cathode ray tube ("CRT"), liquid crystal display ("LCD"), field emission display ("FED"), plasma display, or any other display device suitable for displaying video and/or graphic images and alphanumeric characters recognizable to a user.

The computer system 100 presented herein is an example computing environment in accordance with an aspect. However, the non-limiting example of the computer system 100 is not strictly limited to being a computer system. For example, an aspect provides that the computer system 100 represents a type of data processing analysis that may be used in accordance with various aspects described herein. Moreover, other computing systems may also be implemented. Thus, in an aspect, one or more operations of various aspects of the present technology are controlled or implemented using computer-executable instructions, such as program modules, being executed by a computer. In one implementation, such program modules include routines, programs, objects, components and/or data structures that are configured to perform particular tasks or implement particular abstract data types. In addition, an aspect provides that one or more aspects of the present technology are implemented by utilizing one or more distributed computing environments, such as where tasks are performed by remote processing devices that are linked through a communications network, or such as where various program modules are located in both local and remote computer-storage media including memory-storage devices.

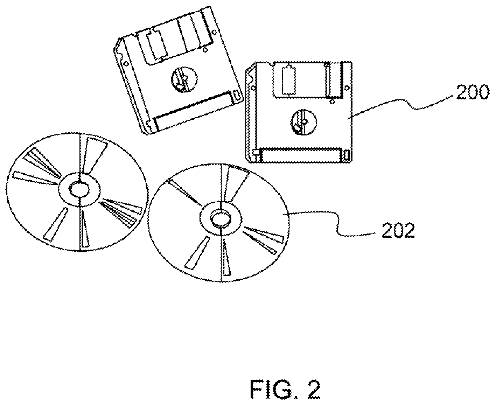

An illustrative diagram of a computer program product (i.e., storage device) embodying the present invention is depicted in FIG. 2. The computer program product is depicted as floppy disk 200 or an optical disk 202 such as a CD or DVD. However, as mentioned previously, the computer program product generally represents computer-readable instructions stored on any compatible non-transitory computer-readable medium. The term "instructions" as used with respect to this invention generally indicates a set of operations to be performed on a computer, and may represent pieces of a whole program or individual, separable, software modules. Non-limiting examples of "instruction" include computer program code (source or object code) and "hard-coded" electronics (i.e. computer operations coded into a computer chip). The "instruction" is stored on any non-transitory computer-readable medium, such as in the memory of a computer or on a floppy disk, a CD-ROM, and a flash drive. In either event, the instructions are encoded on a non-transitory computer-readable medium.

(2) Specific Details of Various Embodiments

Described is a system which provides automatic and adaptive calibration for sensor packages used in the guidance and navigation of Bottom Hole Assemblies (BHAs) employed in wellbore drilling systems. BHAs used for directional drilling in the oil industry are fitted with various Inertial Measurement Units (IMUs). The IMUs are sensor packages comprising all or some of the following types of sensors: accelerometers, magnetometers, and gyroscopes. These sensors provide the necessary measurements to estimate wellbore trajectories. However, all such sensors exhibit bias and scale factor errors which must be compensated for if trajectory estimates are to be accurate. To this end, the sensors are calibrated before deployment, meaning their bias and scale factors are estimated by various measurement procedures in a laboratory. Due to the harsh drilling environment, sensor characteristics tend to drift unpredictably. As a result, the pre-deployment laboratory calibration becomes increasingly less representative of the state of the sensors, leading to less effective error correction. This results in increased errors for trajectory estimates.

The invention disclosed herein is a downhole automatic calibration algorithm embedded in the BHA apparatus, which uses a few of the most recent measurements to update the calibration of all sensors after each measurement. Therefore, the system tracks the drifts in biases and scale factors to maintain sensor accuracy and improve borehole trajectory estimate accuracy. The downhole calibration algorithm works by ensuring that these measurements are consistent with known reference quantities, such as gravity, the Earth's rotation rate, and the Earth's magnetic field. This calibration mechanism does not require human intervention and is, therefore, ideally suited for maintaining the accuracy of the guidance and navigation unit of autonomous drilling systems.

During wellbore drilling, all operations are periodically suspended, such as during pipe connections, providing a quiet and low noise environment in which to make accurate measurements of gravity, the Earth's rotation rate, and the Earth's magnetic field. These measurements, called "surveys", are used to compute estimates of the wellbore path.

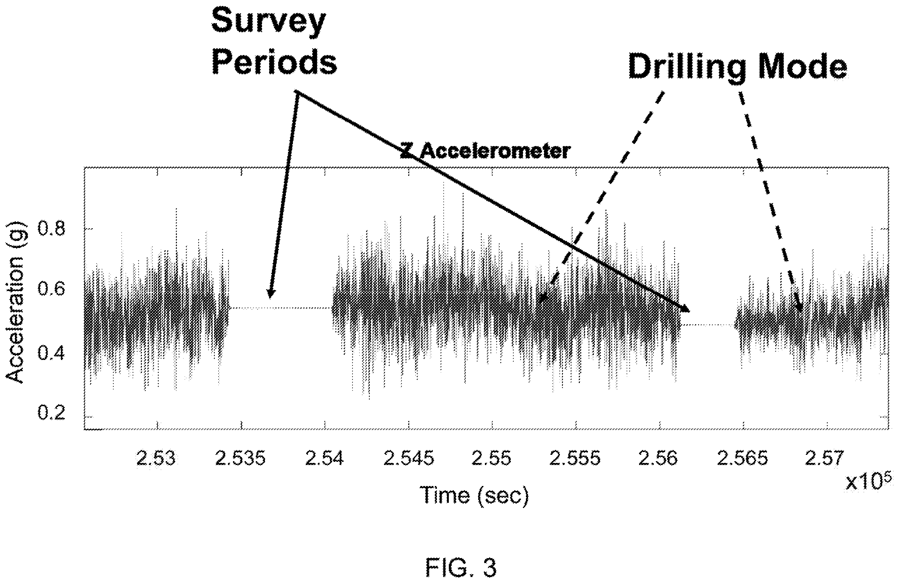

FIG. 3 depicts accelerometer time history showing the difference between noisy drilling periods (i.e., drilling mode) and quiet survey periods during which accurate measurements of gravity can be made. The sensors used for these measurements, namely accelerometers, gyroscopes, and magnetometers, all exhibit bias and scale factor errors.

Estimates for the bias and scale factor are used to compensate for these errors. For example, if an orthogonally mounted sensor triad with known bias vector b and scale factor matrix S registers a measured value $\tilde{\mathbf{U}}$, which could be acceleration, rotation rate, or magnetic field, depending on the sensor, then the corrected measurement $\hat{\mathbf{U}}$ is obtained as follows:

$$\hat{\mathbf{U}} = \mathrm{S}\big(\tilde{\mathbf{U}} - \mathrm{b}\big), \text{ where } \mathrm{b} = \begin{bmatrix} b_x \\ b_y \\ b_z \end{bmatrix} \text{ and } \mathrm{S} = \begin{bmatrix} S_{xx} & S_{xy} & S_{xz} \\ S_{yx} & S_{yy} & S_{yz} \\ S_{zx} & S_{zy} & S_{zz} \end{bmatrix}. \qquad (1)$$

It should be noted that the off diagonal terms of the scale factor matrix S correct any non-orthogonality of the sensor axes. For clarity, generically denote by U the vector consisting of the x, y, and z-components of acceleration, rotation rate, or magnetic field. More specifically, for accelerometers,

$$\mathbf{U} \to \mathbf{A} = (a_x, a_y, a_z)$$

is the acceleration vector. For gyroscopes,

$$\mathbf{U} \to \boldsymbol{\omega} = (\omega_x, \omega_y, \omega_z)$$

is the rotation rate vector, and for magnetometers,

$$\mathbf{U} \to \mathbf{M} = (m_x, m_y, m_z)$$

is the magnetic field vector. Various sensors, such as Micro Electro Mechanical Sensor (MEMS) gyroscopes, require more complex compensation models which include dependence on the specific force applied to the sensor (e.g., gravity vector). The so-called g-dependence can range from a linear term in the bias, extending Equation (1) above into the form

$$\hat{\boldsymbol{\omega}} = \hat{\mathrm{S}}[\tilde{\boldsymbol{\omega}} - \big(\hat{b} + \mathrm{Gf}\big)]$$

to quadratic terms in both the bias and scale factor, resulting in the compensation model

$$\hat{\boldsymbol{\omega}} = \left(\hat{S} + S_g f + S_2 f^2\right)\left[\tilde{\boldsymbol{\omega}} - \left(\hat{b} + Gf + G_2 f^2\right)\right],$$

where f is the specific force vector f = $(f_x, f_y, f_z)$ experienced by the sensor and it is equal to gravity (g) when the sensor is at rest. S2 and G2 are matrices of coefficients multiplying $f^2$ (f squared). $f^2$ is a vector which will have all possible two-term products of the components of f, so that $f^2$ = [fx$^2$,fy$^2$,fz$^2$,fx*fy, fx*fz, fy*fz]. In the most general case, S2 and G2 are 3 by 6 matrices of coefficients. Thus, when one multiplies $f^2$ by one of these matrices, S2 (3 by 6)*$f^2$ (6 by 1), one ends up with a 3 by 1 vector, which corresponds to the xyz components of the sensor. G is a f-sensitivity coefficient matrix which when multiplied with the specific force vector gives the value of the additional bias due to the specific force.

In the system according to embodiments of the present disclosure, b and S are updated after each measurement. Normally, these quantities are derived from lab measurements and are assumed to remain constant during operation. However, in reality they often do change over time, deviating from their assumed constant values, thus reducing the accuracy of calibration. The invention described herein estimates how they change over time. In addition, in-field measurements themselves are used (as opposed to laboratory measurements) to estimate b and S.

As described above, laboratory calibration is typically used to get estimates for the bias and scale factor, including their dependence on temperature and specific force (g-force). However, many sensor characteristics can change in the field, including their biases and scale factors. These changes can be attributed to two main effects. First, the downhole drilling environment is very harsh, with sustained high levels of shock and vibration, high temperatures, and temperature gradients, all of which can physically alter or degrade the sensors and modify their responses from their baseline behavior observed in a laboratory environment. Secondly, even in benign environments, bias and scale factors tend to drift unpredictably over time, deviating from laboratory calibration. Thus, in order to maintain survey measurement accuracy, a method is needed to periodically re-calibrate the sensors while they are downhole in the BHA. The system described herein achieves that goal with an algorithm which combines multi-orientation calibration with a weighted sliding window of the most recent measurements, implemented as embedded software on a BHA or any other guidance and navigation unit. Below is a description of the multi-orientation calibration procedure, and how the sliding window concept applied to it permits tracking bias and scale factor drifts.

(2.1) Multi-Orientation Calibration

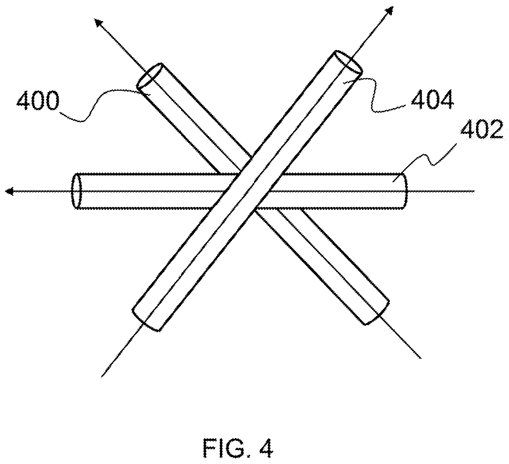

In order to calibrate an orthogonally mounted sensor triad (xyz-components), measurements of a known vector quantity are made with multiple orientations of the triad (represented by elements 400, 402, and 404), as shown in FIG. 4. Then, a bias vector b and a scale factor matrix S are computed such that the norms of all the measurements agree as closely as possible with the norm of the reference vector. For example, when an accelerometer triad is used to measure gravity, the norm (magnitude) of every measurement must satisfy the following:

$$|A| = \sqrt{a_x^2 + a_y^2 + a_z^2} = g,$$

where $g$ is gravity (i.e., the reference quantity), $a_x$, $a_y$, and $a_z$, are the *xyz* components of the acceleration vector measured by the triad, and |A| is the norm or magnitude of the measured acceleration vector. Different variations of this general approach exist, such as described in detail by Frosio et al. in "Autocalibration of MEMS Accelerometers," IEEE Transactions on Instrumentation and Measurement, 58.6 (2009): 2034-2041. Two advantages of the prior art approach are that (1) orientations need not be known precisely, so that no errors are introduced from angle measurements, and (2) misalignment errors between the xyz components get accounted for by the off diagonal terms of the scaling factor matrix S. The same calibration procedure can be used with magnetometer and gyroscope triads, where the norms of the measurements are made to agree with reference values, which in the case of wellbore drilling are the Earth's magnetic field and the Earth's rotation, respectively. It should be noted that while gravity and Earth's rotation rate are for practical purposes constant in time and space, the Earth's magnetic field fluctuates both in time and space. Therefore, each measurement has to be constrained to a magnitude that is dependent on the time and location of the measurement. Various services, such as MagVAR (www.magvar.com), have software which provides an estimate of the Earth's magnetic field based on time and location inputs. In the wellbore drilling industry, accounting for these changes in Earth's magnetic field is referred to as "In-Field Referencing" (IFR).

Described below is the embedded calibration algorithm, using as examples the simplest compensation model given by Equation (1) and the gyroscope as the sensor. Given k measurements of $\mathbf{U}_k$, where $\mathbf{U}$ can be any of acceleration, rotation rate, or magnetic field, a bias vector b and a scale factor matrix S are sought such that the cumulative error E representing the deviation from the reference norms $\left|\mathbf{U}_{ref}^{(k)}\right|$ over all measurements is minimized.

$$E = \sum_{k=1}^{N}(w_k e_k),$$

where

$$e_k = \left|\hat{\mathbf{U}}\right|^2 - \left|\mathbf{U}_{ref}^{(k)}\right|^2 = \left|S(\tilde{\mathbf{U}}_k - b)\right|^2 - \left|\mathbf{U}_{ref}^{(k)}\right|^2$$

is the error for each individual ($k^{th}$) measurement based on the noise level observed during said measurement. For accelerometers, the reference norm is for most practical purposes constant for all measurements and equals gravity $g$:

$$\left|\mathbf{U}_{ref}^{(k)}\right| = \left|\mathbf{A}_{ref}^{(k)}\right| = g, \text{ for all measurements k=1,..,N.}$$

For gyroscopes, the reference norm is also considered constant for all measurements and equal the Earth's rotation rate $\Omega_{Earth}$:

$$\left|\mathbf{U}_{ref}^{(k)}\right| = \left|\boldsymbol{\omega}_{ref}^{(k)}\right| = \Omega_{Earth}, \text{ for all measurements k=1,…,N.}$$

Finally, for magnetometers the reference norm $M_{Earth}$ (or magnitude) of the Earth's magnetic field varies sufficiently in time and space that it's variation from one measurement to the other has to be taken account. $M_{Earth}$ has to be specifically estimated for each measurement based on the time t and earth location x of said measurement. Thus, for the $k^{th}$ measurement

$$\left|\mathbf{U}_{ref}^{(k)}\right| = \left|\mathbf{M}(\mathbf{x})_{ref}^{(k)}\right| = M_{Earth}(t_k, \mathbf{x}_k),$$

where $t_k$ is the time of the $k^{th}$ measurement and $\mathbf{x}_k$ is the location of the $k^{th}$ measurement. Minimizing the cumulative norm error $E$ is akin to solving a nonlinear curve fitting problem where the unknown curve parameters are the components of the bias vector and scale factor matrix. If any of the g-dependent terms are included in the sensor model, then the elements of the corresponding coefficient matrices are added to the list of curve fitting parameters. For example, with g-dependent biases, the error term $ek$ take on the form $e_k = |\hat{S}\{\tilde{\omega} - (\hat{b} + Gf)\}|^2 - |\omega_{ref}|^2$.

In order to solve for the calibration (or fit) parameters, an embedded implementation of the Levenberg-Marquardt optimization algorithm is used to minimize this error and obtain the bias and scale factor values which best compensate measurements so that they come closest to agreeing with the norm of the reference quantity. For example, in the case of gyroscopes used in borehole surveying, $\omega_{ref} = \Omega_{Earth}$ (i.e., the Earth's rotation rate). As can be appreciated by one skilled in the art, the invention is not restricted to implementation of the Levenberg-Marquardt optimization algorithm. Other optimization methods, such as the steepest descent method, can be used, such as those described in C. T. Kelley, Iterative Methods for Optimization, SIAM Frontiers in Applied Mathematics, no 18, 1999, ISBN 0-89871-433-8."

(2.2) Sliding Window for Adaptive Calibration

The multi-orientation calibration is typically used in a laboratory setting where the environment is controlled so that the bias and scale factor remain constant during measurements and can be determined precisely. With downhole measurements, there is no control over the environment or the time elapsed between measurements. Therefore, the bias and scale factor do drift from one measurement to another. The invention described herein consists of a sliding time window which seeks to track in time the bias and scale factor in order to update them after each measurement and maintain accurate calibration.

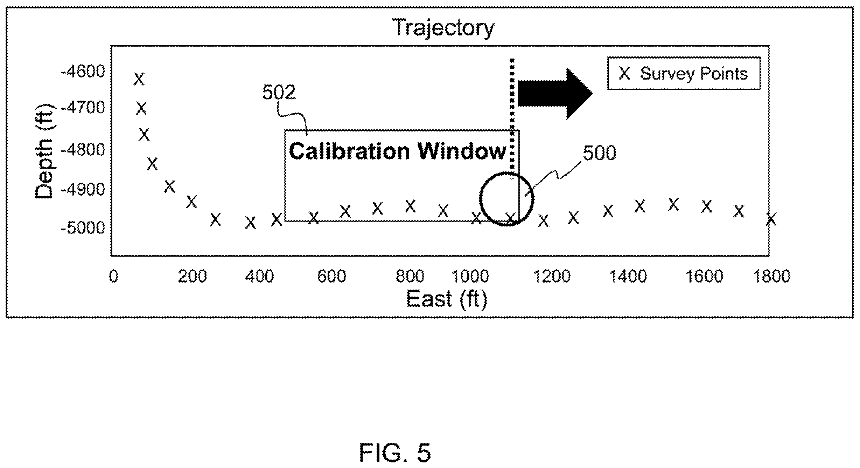

FIG. 5 depicts a wellbore trajectory with survey points of quiet periods marked by x. Calibration of every new survey (represented by the circle 500) is done using a window (i.e., calibration window 502) of most recent measurements. In other words, FIG. 5 shows the survey points for a drilling trajectory with the advancing time window concept according to embodiments of the present disclosure. The measurements for each survey are stored in memory by the embedded software. After each measurement, such as the one circled in FIG. 5 (element 500), the software replaces the oldest measurement in the calibration window 502 with the latest measurement and attempts to re-calibrate the sensors. The software code then assesses the quality and reliability of the calibration by going through a check list that includes, but is not limited to, (1) convergence of the optimization (e.g., Levenberg-Marquardt algorithm; although any suitable algorithm can be used such that it minimizes the cost function E=sum(...) defined above), (2) sufficient angle variation between the orientations of all the measurements in the window (2-3 degrees is usually sufficient) and (3) the Condition Number of the matrices used by the optimization algorithm (i.e., the optimization minimizes the error for a given curve fitting model). The Condition Number of a matrix is a measure of how "ill-conditioned" it is. In a practical sense, it is a measure of how error prone is the solution of a system described by this matrix. If the Condition Number is very high, the numerically computed solutions are likely to suffer large errors and cannot be trusted. Thus, when a large Condition Number is observed, the computed calibration parameters are not trusted. The Condition Number is described in "Belsley, David A.; Kuh, Edwin; Welsch, Roy E. (1980). "The Condition Number". Regression Diagnostics: Identifying Influential Data and Sources of Collinearity. New York: John Wiley & Sons. pp. 100-104. ISBN 0-471-05856-4."

If the calibration is successful, the bias and scale factor are updated. If it is not, the window of data points is expanded to include older measurements, and calibration is attempted again. This is repeated until either calibration is successful or it is determined that older measurements are not representative anymore of the current state of the sensors, in which case calibration parameters are left unchanged from the previous measurement.

The procedure described above is one embodiment of the invention according to embodiments of this disclosure. Additional embodiments include weighting each measurement such that the most recent one has the greatest effect on calibration, with older measurements getting lower weighting the older they are. Another embodiment is using polynomial expansions for the bias and scale factors to represent their drift, allowing to track them more accurately. For example, to model a linear variation within the calibration window, one can modify the bias vector to be a linear function instead of just a constant within the window of calibration by re-writing it as the following:

$$ \mathrm{b} = \begin{bmatrix} b_x^0 + \alpha(b_x^1 - b_x^0) \\ b_y^0 + \alpha(b_y^1 - b_y^0) \\ b_z^0 + \alpha(b_z^1 - b_z^0) \end{bmatrix} $$

where the parameter $\alpha$ takes on values between 0 and 1, starting from 0 for the oldest measurement to reach 1 for the most recent measurement. The idea of expressing the bias and scale factors as polynomials and solving for their coefficients using a norm-based optimization is unique and improves upon existing technologies. The elements of the scale factor matrix can be modified in a similar fashion. Even more complexity can be added by using an arbitrary-order polynomial representation of the drift instead of a linear one, so that each component of the bias vector and scaling matrix, generically named c here, can be written as an $N^{th}$ order polynomial as follows:

$$ c = \sum_{n=0}^{N} \alpha^n c_n = c_0 + \alpha c_1 + \cdots + \alpha^N c_N. $$

However, while adding more calibration parameters can represent the bias and scale factor drifts more accurately, the calibration window has to be made larger to include at least as many data points as the number of unknown calibration parameters ($c_0$, $c_1$, $c_2$, $\cdots$, $c_N$) that need to be solved. Note that the idea of expressing the bias and scale factors as polynomials and solving for their coefficients using a norm-based optimization according to the embodiments of the present disclosure is unique and goes beyond existing methods.

(2.3) Experimental Studies

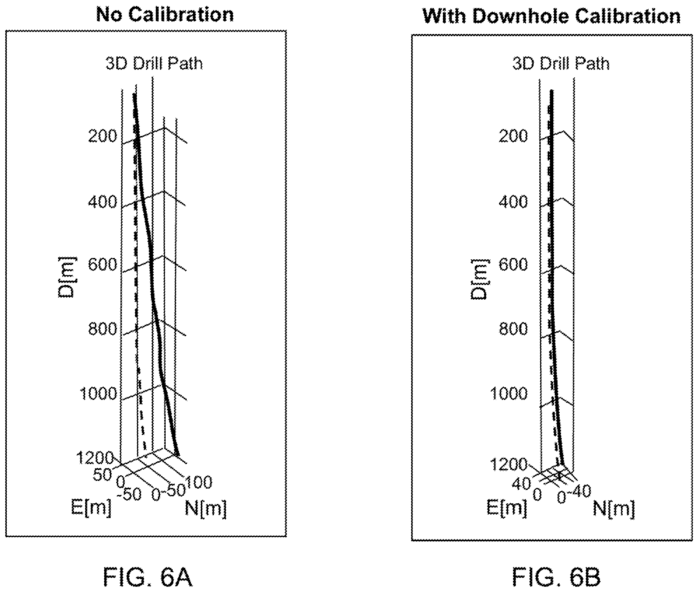

In initial experimental studies of the system according to embodiments of the present disclosure, bias errors were purposely added to the survey measurements of a trajectory, and the trajectory accuracies with and without downhole calibration were compared. FIGs. 6A and 6B illustrate that downhole calibration according to embodiments of the present disclosure dramatically reduces trajectory error growth, demonstrating that the system and process described herein provides a dramatic improvement in the technologies associated with borehole drilling. In both FIG. 6A and FIG. 6B, the dashed line represents a reference trajectory, and the solid line represents AGWD (Autonomous Guidance While Drilling) surveys. FIG. 6A depicts a reference trajectory vs. a trajectory obtained with bias errors applied to the accelerometer triad. FIG. 6B depicts a reference trajectory vs. a trajectory obtained with downhole calibration correcting the bias errors according to embodiments of the present disclosure, resulting in aligned trajectories.

FIG. 6A shows how much the trajectory deviates from the reference when bias errors ($b_x$ = 0.85 m/s$^2$, by = 0.6 m/s$^2$, $b_z$ = -0.75 m/s$^2$ (m denotes meters, and s denotes seconds)) are applied to the accelerometer. With downhole calibration turned on, the trajectory in FIG. 6B is obtained, which deviates from the reference trajectory by at most 1.1 meters vs. 90 meters for the uncalibrated trajectory.

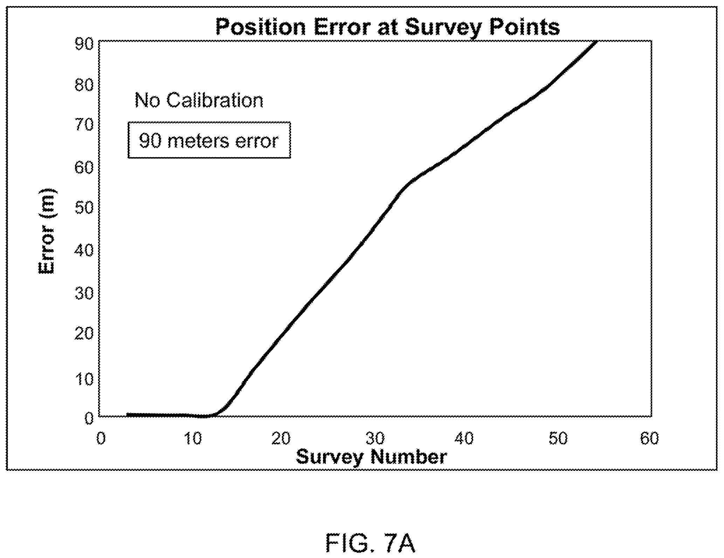

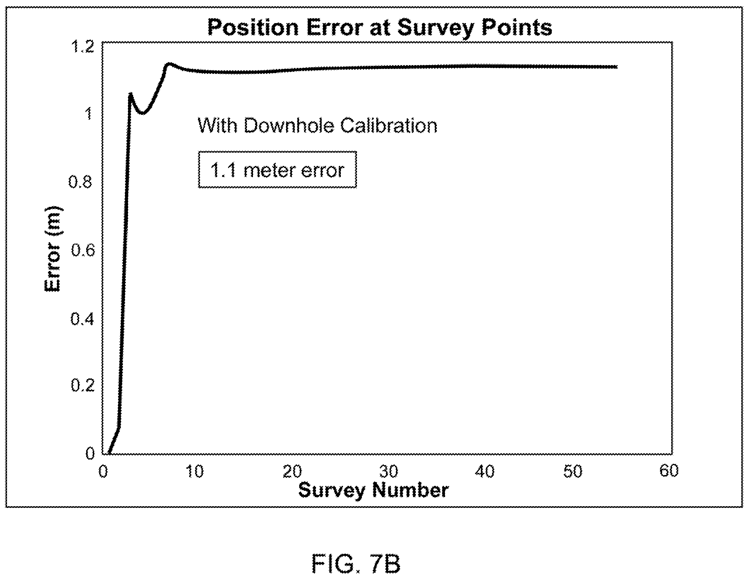

The error growth from one survey point to the other is shown in FIGs. 7A and 7B, where it is shown that after a few survey points, the downhole calibration algorithm according to embodiments of the present disclosure is able to calibrate the sensors to prevent further error growth. Specifically, downhole calibration reduces error at the end of the trajectory by a factor of almost 90. FIG. 7A shows trajectory error growth with bias errors applied to the accelerometer. FIG. 7B shows trajectory error with bias errors corrected by downhole calibration.

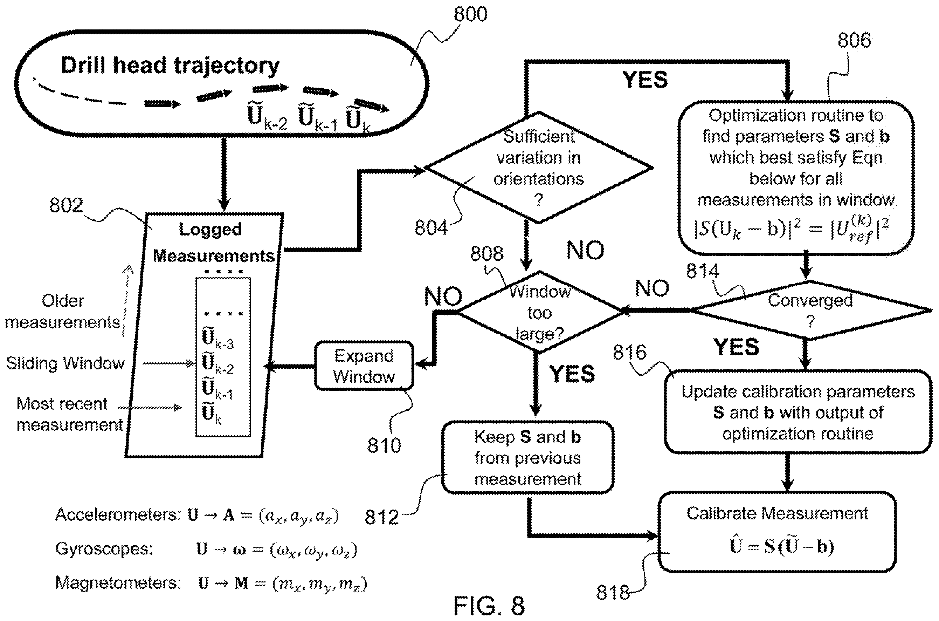

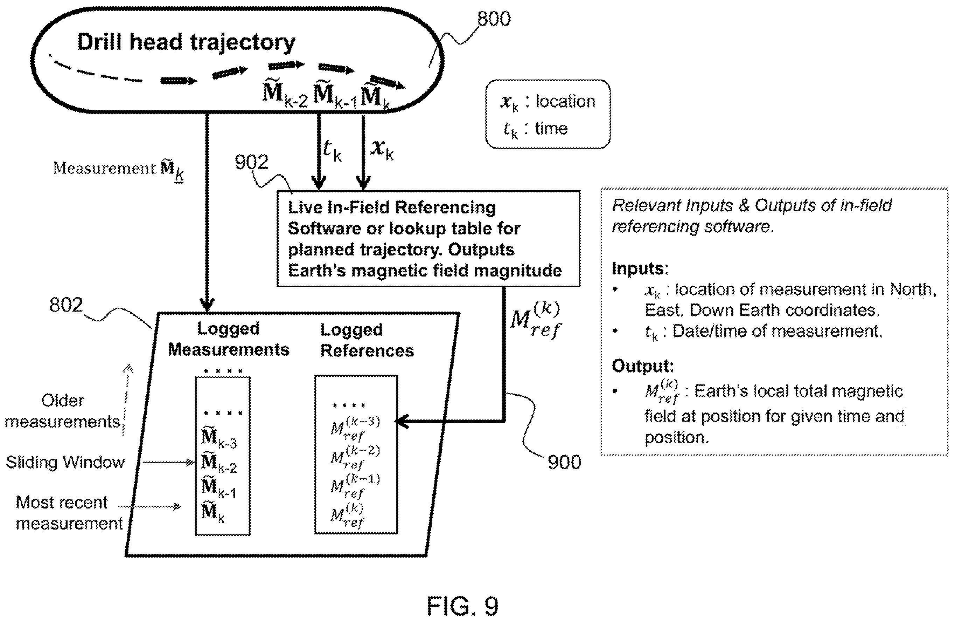

FIG. 8 is a flow diagram depicting downhole calibration according to embodiments of the present disclosure. Measurements of a drill head trajectory 800 obtained from multi-axis accelerometers, gyroscopes, and magnetometers are logged in a survey table (element 802). The logged measurements (element 802) include older measurements and recent measurements, and in the case of magnetometers also includes the reference magnitude for each measurement. FIG. 9 depicts modification to the survey table 802 (or chart) consisting of adding the logging magnetic reference (element 900) unique to each survey based on the output of IFR (in-field referencing 902) software. FIG. 9 shows the special case of element 802 for magnetometers, where the reference norm (i.e., the magnetic field magnitude of the Earth) is computed as a function of the time and location of the measurement.

Referring back to FIG. 8, the system then assesses the quality and reliability of the calibration by determining, for example, if there is sufficient angle variation (element 804) between the orientations of all measurements in the calibration window. If the calibration is successful (e.g., there is sufficient angle variation), then the bias (b) and scale factor (S) are updated (element 806). The following are references for the sensors utilized in wellbore drilling. For accelerometers, $|u_{ref}|$ =g, and it is typically considered constant. For gyroscopes, $|u_{ref}| = \Omega_{Earth}$ is constant, where $\Omega_{Earth}$ represents the Earth's rotation rate.

For magnetometers, the reference norm for each measurement is different because the Earth's magnetic field is a function of space and time. Therefore, the reference magnetic field for each single measurement must be computed based on the time and location of the measurement. The magnetic reference M must be expressed as a function of time $tk$ and location $xk$ of the $k^{th}$ measurement $\tilde{u}_k$ according to $\left| u^{(k)}_{ref} \right| = M_{Earth}(t_k, x_k)$. The error expression is then modified simply by adding a superscript k to the reference norm, because it is different for each measurement $\tilde{u}_k$ according to the following:

$$e_k = |S(\tilde{u}_k - b|^2 - \left| u^{(k)}_{ref} \right|^2$$

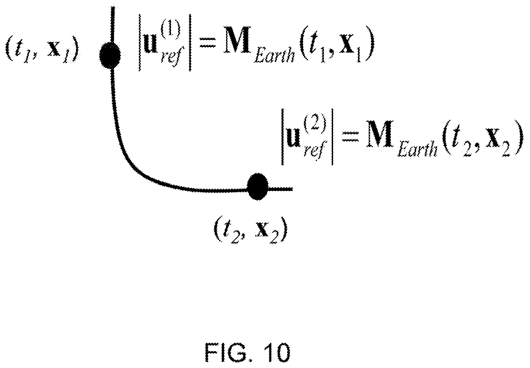

. Various commercial and government software provide estimates to the magnetic reference based on measurement databases and physical models, such as magvar.com. FIG. 10 depicts how the reference magnetic field norm changes at survey points along a wellbore.

If the calibration is not successful, then the system determines whether the window of data points is too large (element 808). If it is not, the window of data points is expanded (element 810) to include older measurements, and calibration is attempted again. If the window of data points is too large, then the bias (b) and scale factor (S) from a previous measurement are used (element 812).

Following updating of the bias (b) and scale factor (S) (element 806), a determination is made regarding whether there is convergence of the curve fitting optimization (element 814). If not, the system returns to determining whether the window of data points is too large (element 808). If there is convergence, then the calibration parameters (bias (b) and scale factor (S)) are updated 816 with the output of the optimization routine (element 806). The final calibration measurement is then output (element 818).

For each $k^{th}$ measurement $\tilde{u}_k$ by a three-axis sensor in $|S(\tilde{u}_k - b)|^2 - |u_{ref}|^2$ (element 806), the squared norm error $ek$ is given by a known reference from the measurement norm $e_k = |S(\tilde{u}_k - b)|^2 - |u_{ref}|^2$, where $u$ can be any of acceleration, rotation rate, or magnetic field. The total error across all $N$ measurements is minimized by minimizing the sum $E$ of the individual measurement errors $E = \sum_{k=1}^{N} e_k$.

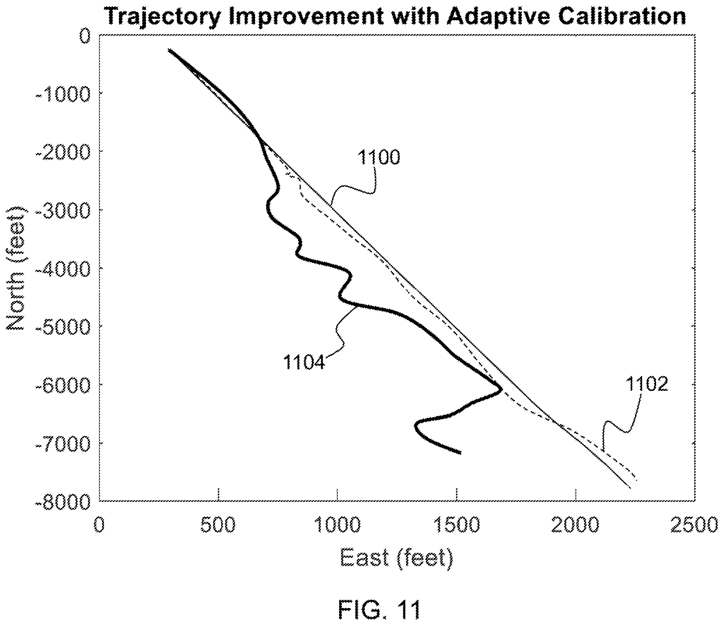

FIG. 11 illustrates how the estimated trajectory starts deviating from the reference trajectory of an actual wellbore as sensor calibration parameters drift over time. The adaptive calibration algorithm tracks the drift and compensates for it, resulting in a trajectory estimate that is significantly closer to the known trajectory. In FIG. 11, the solid curve 1100 represents a reference trajectory, the dashed curve 1102 represents an adaptive calibration trajectory (according to embodiments of the invention), and the bold solid curve 1104 represents fixed calibration.

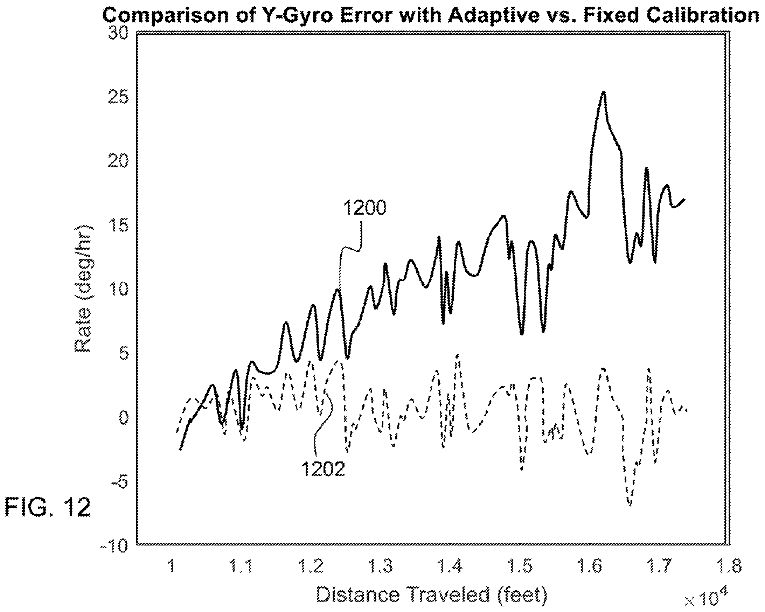

FIG. 12 depicts how the drift of calibration parameters over time increases the measurement error in one of the gyroscopes onboard a wellbore drilling system. The adaptive calibration algorithm tracks the drift and compensates for it, resulting in significantly lower measurement errors (factor five reduction near the end of the trajectory). In FIG. 12, the solid curve 1200 represents fixed calibration, and the dashed curve 1202 represents adaptive calibration as described herein.

A purpose of the invention described herein is to continuously update and track the calibration parameters of sensors subject to unpredictable drifts caused by harsh environments, random drifts, and general degradation. Furthermore, the algorithms to perform such calibration can be embedded in the autonomous guidance and navigation apparatus of BHAs. The final result is more accurate navigation and wellbore trajectory estimation. Non-limiting examples of automatic actions that can be caused to occur following calibration are (1) correcting/updating measurements with the latest calibration; (2) using updated measurements to compute an updated trajectory; and (3) comparing the updated trajectory to a planned trajectory. Depending on the outcome of the comparison in (3), a human driller can steer the drilling machinery back on course. In an autonomous system, the control system can use the attitude estimated with the new calibration to send commands to its steering system to make the drill head point in the intended direction.

The time evolving nature of the disclosed calibration method, including the functional form of the bias and scale factor components, as well as the measurement weighting scheme of the sliding measurement window, is a technological improvement over the prior art.

As described above, the invention is aimed at improving the performance of inertial measurement units (IMUs) in wellbore drilling BHAs. However, the system can be readily applied to other applications. For example, the calibration of IMUs in vehicles can be updated with new data each time the vehicle comes to a stop. Following calibration, computations can be made to update navigational parameters, such as position and heading (i.e., direction in which the vehicle is pointed). In the case of an autonomous vehicle, which is a GPS-denied environment, it would result in steering inputs to correct for position and heading.

## Claims

1. A system for adaptive calibration of a sensor of an inertial measurement unit (IMU), the system comprising:
   one or more processors and a non-transitory computer-readable medium having executable instructions encoded thereon such that when executed, the one or more processors perform operations of:
   following each sensor measurement, performing automatic calibration of a multi-axis sensor;

   assessing a reliability of a current calibration,
   wherein if the current calibration is reliable, then updating bias and scale factor values according to the most recent sensor measurement, resulting in updated bias and scale factor values, and
   wherein if the current calibration is not reliable, then using previous bias and scale factor values; and causing automatic calibration of the multi-axis sensor using either the updated or previous bias and scale factor values.

2. The system as set forth in Claim 1, wherein the one or more processors further perform an operation of using the automatic calibration for guidance and navigation of a bottom hole assembly (BHA) employed in a wellbore drilling system.

3. The system as set forth in Claim 1, the method as set forth in Claim 12, or the computer program product as set forth in Claim 13, wherein the one or more processors further perform an operation of determining a bias value and a scale factor value which best compensate for errors in a previous sensor measurement of the multi-axis sensor, resulting in previous bias and scale factor values.

4. The system as set forth in Claim 1, or the method as set forth in Claim 12, wherein the errors comprise bias, scale factor, and non-orthogonality errors.

5. The system as set forth in Claim 1, or the method as set forth in Claim 12, wherein during automatic calibration, the one or more processors further perform operations of:

   replacing an oldest sensor measurement in a calibration window with a most recent sensor measurement; and calibrating the multi-axis sensor using a most recent calibration window.

6. The system as set forth in Claim 1, the method as set forth in Claim 12, or the computer program product as set forth in Claim 13, wherein the one or more processors further perform an operation of determining a bias vector and a scale factor matrix such that a cumulative error representing a deviation from reference values over all sensor measurements is minimized.

7. The system as set forth in Claim 1, the method as set forth in Claim 12, or the computer program product as set forth in Claim 13, wherein if the current calibration is not reliable, then the one or more processors further perform operations of:

expanding a calibration window to include older sensor measurements; and
re-calibrating the multi-axis sensor until the current calibration is reliable or it is determined that the older sensor measurements are not representative of a current state of the multi-axis sensor, so previous bias and scale factor values are used.

8. The system as set forth in Claim 1, the method as set forth in Claim 12, or the computer program product as set forth in Claim 13, wherein each sensor measurement is weighted such that the most recent sensor measurement has the greatest effect on calibration, and wherein older sensor measurements are assigned lower weights the older they are.

9. The system as set forth in Claim 1, or the method as set forth in Claim 12, wherein polynomial expansions are used to represent drifts of the bias and scale factor values.

10. The system as set forth in Claim 1, wherein sensor measurements are used to compute estimates of a wellbore path.

11. The system as set forth in claim 1, wherein the one or more processors perform the further operation of:
using the automatic calibration for a vehicle.

12. A computer implemented method for adaptive calibration of a sensor of an inertial measurement unit (IMU), the method comprising an act of:

causing one or more processers to execute instructions encoded on a non-transitory computer-readable medium, such that upon execution, the one or more processors perform operations of:
following each sensor measurement, performing automatic calibration of a multi-axis sensor;
assessing a reliability of a current calibration,
wherein if the current calibration is reliable, then updating bias and scale factor values according to the most recent sensor measurement, resulting in updated bias and scale factor values, and
wherein if the current calibration is not reliable, then using previous bias and scale factor values; and
causing automatic calibration of the multi-axis sensor using either the updated or previous bias and scale factor values.

13. A computer program product for adaptive calibration of a sensor of an inertial measurement unit (IMU), the computer program product comprising:
computer-readable instructions stored on a non-transitory computer-readable medium that are executable by a computer having one or more processors for causing the processor to perform operations of:
following each sensor measurement, performing automatic calibration of a multi-axis sensor;

assessing a reliability of a current calibration,
wherein if the current calibration is reliable, then updating bias and scale factor values according to the most recent sensor measurement, resulting in updated bias and scale factor values, and
wherein if the current calibration is not reliable, then using previous bias and scale factor values; and
causing automatic calibration of the multi-axis sensor using either the updated or previous bias and scale factor values.

**Patentansprüche**

1. System zur adaptiven Kalibrierung eines Sensors einer Trägheitsmesseinheit (IMU), wobei das System umfasst:
einen oder mehrere Prozessoren und ein nicht-transitorisches computerlesbares Medium, welches ausführbare Anweisungen aufweist, welche darauf kodiert sind, so dass, wenn sie ausgeführt werden, der eine oder die mehreren Prozessoren folgende Vorgänge durchführen:
folgend auf jede Sensormessung, Durchführen einer automatischen Kalibrierung eines Mehrachsensensors;

Bewerten einer Zuverlässigkeit einer aktuellen Kalibrierung,
wobei, wenn die aktuelle Kalibrierung zuverlässig ist, Bias- und Skalierungsfaktorwerte gemäß der jüngsten Sensormessung aktualisiert werden, was in aktualisierten Bias- und Skalierungsfaktorwerten resultiert, und
wobei, wenn die aktuelle Kalibrierung nicht zuverlässig ist, vorherige Bias- und Skalierungsfaktorwerte verwendet werden;
Veranlassen einer automatischen Kalibrierung des Mehrachsensensors unter Verwendung entweder der aktualisierten oder der vorherigen Bias- und Skalierungsfaktorwerte.

2. System nach Anspruch 1, wobei der eine oder die mehreren Prozessoren ferner einen Vorgang eines Verwendens der automatischen Kalibrierung für eine Führung und eine Navigation einer in einem Bohrlochbohrsystem eingesetzten Bodenlochanordnung (BHA) durchführen.

3. System nach Anspruch 1, Verfahren nach Anspruch 12 oder Computerprogrammprodukt nach Anspruch 13, wobei der eine oder die mehreren Prozessoren ferner einen Vorgang eines Bestimmens eines Bias- und Skalierungsfaktorwerts durchführen, welche Fehler in einer vorherigen Sensormessung des Mehrachsensensors am besten kompensieren, was in vorherigen Bias- und Skalierungsfaktorwerten resultiert.

4. System nach Anspruch 1 oder Verfahren nach Anspruch 12, wobei die Fehler Bias-, Skalierungsfaktor- und Nicht-Orthogonalitätsfehler umfasst.

5. System nach Anspruch 1 oder Verfahren nach Anspruch 12, wobei während der automatischen Kalibrierung der eine oder die mehreren Prozessoren ferner folgende Vorgänge durchführen:

Ersetzen einer ältesten Sensormessung in einem Kalibrierungsfenster durch eine jüngste Sensormessung; und
Kalibrieren des Mehrachsensensors unter Verwendung eines jüngsten Kalibrierungsfensters.

6. System nach Anspruch 1, Verfahren nach Anspruch 12 oder Computerprogrammprodukt nach Anspruch 13, wobei der eine oder die mehreren Prozessoren ferner einen Vorgang eines Bestimmens einer Bias- und Skalierungsfaktormatrix durchführen, so dass ein kumulativer Fehler minimiert ist, welcher eine Abweichung von Referenzwerten über alle Sensormessungen repräsentiert.

7. System nach Anspruch 1, Verfahren nach Anspruch 12 oder Computerprogrammprodukt nach Anspruch 13, wobei, wenn die aktuelle Kalibrierung nicht zuverlässig ist, der eine oder die mehreren Prozessoren ferner folgende Vorgänge durchführen:

Erweitern eines Kalibrierungsfensters derart, dass es ältere Sensormessungen umfasst; und
Neukalibrieren des Mehrachsensensors, bis die aktuelle Kalibrierung zuverlässig ist oder bestimmt ist, dass die älteren Sensormessungen nicht für einen aktuellen Zustand des Mehrachsensensors repräsentativ sind, so dass vorherige Bias- und Skalierungsfaktorwerte verwendet werden.

8. System nach Anspruch 1, Verfahren nach Anspruch 12 oder Computerprogrammprodukt nach Anspruch 13, wobei jede Sensormessung derart gewichtet ist, dass die jüngste Sensormessung die größte Wirkung auf eine Kalibrierung hat, und wobei älteren Sensormessungen je älter sie sind niedrigere Gewichtungen zugewiesen sind.

9. System nach Anspruch 1 oder Verfahren nach Anspruch 12, wobei polynomiale Erweiterungen verwendet werden, um Driften der Bias- und Skalierungsfaktorwerte zu repräsentieren.

10. System nach Anspruch 1, wobei Sensormessungen verwendet werden, um Schätzungen eines Bohrlochpfads zu berechnen.

11. System nach Anspruch 1, wobei der eine oder die mehreren Prozessoren den weiteren folgenden Vorgang durchführen:
Verwenden der automatischen Kalibrierung für ein Fahrzeug.

12. Computerimplementiertes Verfahren zur adaptiven Kalibrierung eines Sensors einer Trägheitsmesseinheit (IMU), wobei das Verfahren einen folgenden Akt umfasst:
Veranlassen, dass ein oder mehrere Prozessoren Anweisungen ausführen, welche auf ein nicht-transitorisches computerlesbares Medium kodiert sind, so dass, auf eine Ausführung hin der eine oder die mehreren Prozessoren folgende Vorgänge durchführen:
folgend auf jede Sensormessung, Durchführen einer automatischen Kalibrierung eines Mehrachsensensors;

Bewerten einer Zuverlässigkeit einer aktuellen Kalibrierung,

wobei, wenn die aktuelle Kalibrierung zuverlässig ist, Bias- und Skalierungsfaktorwerte gemäß der jüngsten Sensormessung aktualisiert werden, was in aktualisierten Bias- und Skalierungsfaktorwerten resultiert, und wobei, wenn die aktuelle Kalibrierung nicht zuverlässig ist, vorherige Bias- und Skalierungsfaktorwerte verwendet werden;

Veranlassen einer automatischen Kalibrierung des Mehrachsensensors unter Verwendung entweder der aktualisierten oder der vorherigen Bias- und Skalierungsfaktorwerte.

13. Computerprogrammprodukt zur adaptiven Kalibrierung eines Sensors einer Trägheitsmesseinheit (IMU), wobei das Computerprogrammprodukt umfasst:

auf einem nicht-transitorischen computerlesbaren Medium gespeicherte computerlesbare Anweisungen, welche durch einen Computer ausführbar sind, welcher einen oder mehrere Prozessoren aufweist, um zu veranlassen, dass der Prozessor folgende Vorgänge durchführt:

folgend auf jede Sensormessung, Durchführen einer automatischen Kalibrierung eines Mehrachsensensors;

Bewerten einer Zuverlässigkeit einer aktuellen Kalibrierung,
wobei, wenn die aktuelle Kalibrierung zuverlässig ist, Bias- und Skalierungsfaktorwerte gemäß der jüngsten Sensormessung aktualisiert werden, was in aktualisierten Bias- und Skalierungsfaktorwerten resultiert, und wobei, wenn die aktuelle Kalibrierung nicht zuverlässig ist, vorherige Bias- und Skalierungsfaktorwerte verwendet werden;

Veranlassen einer automatischen Kalibrierung des Mehrachsensensors unter Verwendung entweder der aktualisierten oder der vorherigen Bias- und Skalierungsfaktorwerte.

## Revendications

1. Système d'étalonnage adaptatif d'un capteur d'une unité de mesure inertielle (IMU), le système comprenant :
un ou plusieurs processeurs et un support informatique non transitoire lisible par ordinateur ayant des instructions exécutables encodées sur celui-ci, de telle sorte que lorsqu'elles sont exécutées, les un ou plusieurs processeurs effectuent des opérations consistant à :

à la suite de chaque mesure de capteur, effectuer un étalonnage automatique d'un capteur multi-axe ;
évaluer une fiabilité d'un étalonnage actuel,
si l'étalonnage actuel est fiable, alors mettre à jour des valeurs de biais et de facteur d'échelle selon la mesure de capteur la plus récente, avec comme résultat des valeurs de biais et de facteur d'échelle mises à jour, et
si l'étalonnage actuel n'est pas fiable, alors utiliser des valeurs de biais et de facteur d'échelle précédentes ; et provoquer un étalonnage automatique du capteur multi-axe en utilisant les valeurs de biais et de facteur d'échelle précédentes ou mises à jour.

2. Système selon la revendication 1, dans lequel les un ou plusieurs processeurs effectuent en outre une opération d'utilisation de l'étalonnage automatique pour le guidage et la navigation d'un ensemble de fond de trou (BHA) employé dans un système de forage de puits.

3. Système selon la revendication la revendication 1, procédé selon la revendication 12, ou produit de programme informatique selon la revendication 13, dans lequel les un ou plusieurs processeurs effectuent en outre une opération de détermination d'une valeur de biais et d'une valeur de facteur d'échelle qui compensent au mieux des erreurs dans une mesure capteur précédente du capteur multi-axe, avec comme résultat des valeurs de biais et de facteur d'échelle précédentes.

4. Système selon la revendication la revendication 1, ou procédé selon la revendication 12, dans lequel les erreurs comprennent des erreurs de biais, de facteur d'échelle et de non-orthogonalité.

5. Système selon la revendication la revendication 1, ou procédé selon la revendication 12, dans lequel durant l'étalonnage automatique, les un ou plusieurs processeurs effectuent en outre des opérations consistant à :

remplacer une mesure de capteur la plus ancienne dans une fenêtre d'étalonnage par une mesure de capteur la plus récente ; et
étalonner le capteur multi-axe en utilisant une fenêtre d'étalonnage la plus récente.

**6.** Système selon la revendication la revendication 1, procédé selon la revendication 12 ou produit de programme informatique selon la revendication 13, dans lequel les un ou plusieurs processeurs effectuent en outre une opération de détermination d'un vecteur de biais et d'une matrice de facteur d'échelle de sorte qu'une erreur cumulative représentant un écart par rapport à des valeurs de référence sur toutes les mesures de capteur soit minimisé.

**7.** Système selon la revendication la revendication 1, procédé selon la revendication 12 ou produit de programme informatique selon la revendication 13, dans lequel si l'étalonnage actuel n'est pas fiable, alors les un ou plusieurs processeurs effectuent en outre des opérations consistant à :

étendre une fenêtre d'étalonnage pour inclure des mesures de capteur plus anciennes ; et
ré-étalonner le capteur multi-axe jusqu'à ce que l'étalonnage actuel soit fiable, ou s'il est déterminé que les mesures de capteur plus anciennes ne sont pas représentatives d'un état actuel du capteur multi-axe, alors les valeurs de biais et de facteur d'échelle précédentes sont utilisées.

**8.** Système selon la revendication la revendication 1, procédé selon la revendication 12 ou produit de programme informatique selon la revendication 13, dans lequel chaque mesure de capteur est pondérée de sorte que la mesure de capteur la plus récente présente l'effet sur l'étalonnage, et dans lequel plus elles sont anciennes, plus les mesures de capteur se voient attribuer des poids plus faibles.

**9.** Système selon la revendication 1, ou procédé selon la revendication 12, dans lequel des expansions polynomiales sont utilisées pour représenter des dérives des valeurs de biais et de facteur d'échelle.

**10.** Système selon la revendication 1, dans lequel des mesures capteur sont utilisées pour calculer des estimations d'un trajet de puits.

**11.** Système selon la revendication 1, dans lequel les un ou plusieurs processeurs effectuent l'opération supplémentaire consistant à :
utiliser l'étalonnage automatique pour un véhicule.

**12.** Procédé mis en œuvre par ordinateur pour un étalonnage adaptatif d'un capteur d'une unité de mesure inertielle (IMU), le procédé comprenant un acte consistant à :
amener un ou plusieurs processeurs à exécuter des instructions encodées sur un support informatique non transitoire lisible par ordinateur, de sorte qu'à l'exécution, les un ou plusieurs processeurs effectuent des opérations consistant à :

à la suite de chaque mesure de capteur, effectuer un étalonnage automatique d'un capteur multi-axe ;
évaluer une fiabilité d'un étalonnage actuel,
si l'étalonnage actuel est fiable, alors mettre à jour des valeurs de biais et de facteur d'échelle selon la mesure de capteur la plus récente, avec comme résultat des valeurs de biais et de facteur d'échelle mises à jour, et
si l'étalonnage actuel n'est pas fiable, alors utiliser des valeurs de biais et de facteur d'échelle précédentes ; et
provoquer un étalonnage automatique du capteur multi-axe en utilisant les valeurs de biais et de facteur d'échelle mises à jour ou précédentes.

**13.** Produit de programme informatique pour un étalonnage adaptatif d'un capteur d'une unité de mesure inertielle (IMU), le produit de programme informatique comprenant :
des instructions lisibles par ordinateur stockées sur un support informatique non transitoire lisible par ordinateur qui peuvent être exécutées par un ordinateur ayant un ou plusieurs processeurs pour amener le processeur à effectuer des opérations consistant à :

à la suite de chaque mesure de capteur, effectuer un étalonnage automatique d'un capteur multi-axe ;
évaluer une fiabilité d'un étalonnage actuel,
si l'étalonnage actuel est fiable, alors mettre à jour des valeurs de biais et de facteur d'échelle selon la mesure de capteur la plus récente, avec comme résultat des valeurs de biais et de facteur d'échelle mises à jour, et
si l'étalonnage actuel n'est pas fiable, alors utiliser des valeurs de biais et de facteur d'échelle précédentes ; et
provoquer un étalonnage automatique du capteur multi-axe en utilisant les valeurs de biais et de facteur d'échelle mises à jour ou précédentes.

| Processor 104 | Volatile Memory Unit 106 | Non-Volatile Memory Unit 108 | Interface 110 |

Address/Data Bus 102

| Input Device 112 | Cursor Control Device 114 | Storage Device 116 | Display Device 118 |

FIG. 1

EP 3 601 954 B1

FIG. 2

FIG. 3

FIG. 4

FIG. 5

No Calibration

3D Drill Path

FIG. 6A

With Downhole Calibration

3D Drill Path

FIG. 6B

FIG. 7A

EP 3 601 954 B1

**Position Error at Survey Points**

With Downhole Calibration

1.1 meter error

FIG. 7B

FIG. 8

Accelerometers: $\mathbf{U} \to \mathbf{A} = (a_x, a_y, a_z)$

Gyroscopes: $\mathbf{U} \to \boldsymbol{\omega} = (\omega_x, \omega_y, \omega_z)$

Magnetometers: $\mathbf{U} \to \mathbf{M} = (m_x, m_y, m_z)$

FIG. 9

EP 3 601 954 B1

$$(t_1, \mathbf{x}_1) \quad \left|\mathbf{u}_{ref}^{(1)}\right| = \mathbf{M}_{Earth}(t_1, \mathbf{x}_1)$$

$$\left|\mathbf{u}_{ref}^{(2)}\right| = \mathbf{M}_{Earth}(t_2, \mathbf{x}_2)$$

$$(t_2, \mathbf{x}_2)$$

FIG. 10

**Trajectory Improvement with Adaptive Calibration**

FIG. 11

EP 3 601 954 B1

**Comparison of Y-Gyro Error with Adaptive vs. Fixed Calibration**

FIG. 12

EP 3 601 954 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 82348917
- US 62451019
- US 823489
- US 38743516
- US 62321042
- US 27939016
- US 62233936
- US 62427561
- US 62477327
- WO 2015013523 A

### Non-patent literature cited in the description

- **FROSIO et al.** Autocalibration of MEMS Accelerometers. *IEEE Transactions on Instrumentation and Measurement*, 2009, vol. 58 (6), 2034-2041
- **C. T. KELLEY**. Iterative Methods for Optimization. *SIAM Frontiers in Applied Mathematics*, 1999 (18), ISBN 0-89871-433-8
- The Condition Number. **BELSLEY, DAVID A**; **KUH, EDWIN**; **WELSCH, ROY E.** Regression Diagnostics: Identifying Influential Data and Sources of Collinearity. John Wiley & Sons, 1980, 100-104